# EUROPÄISCHE PATENTSCHRIFT

(11) **EP 0 812 098 B1**
(45) Veröffentlichungstag und Bekanntmachung des Hinweises auf die Patenterteilung: **17.01.2001**
(21) Anmeldenummer: 97108425.6
(22) Anmeldetag: 24.05.1997
(51) Int. Cl.: H04N 1/00

(54) **Videoberatungssystem für Augenoptiker**
Video advice system for optician
Système de consultation vidéo pour opticien

(30) Priorität: 07.06.1996 DE 29610052 U
(43) Veröffentlichungstag der Anmeldung: 10.12.1997
(73) Patentinhaber: Carl Zeiss, 89518 Heidenheim (Brenz) (DE); CARL ZEISS-STIFTUNG HANDELND ALS CARL ZEISS, D-89518 Heidenheim (Brenz) (DE)
(72) Erfinder: Saur, Konrad, 73432 Waldhausen (DE); Grimm, Wolfgang, Dr., 89522 Heidenheim (DE)

(56) Entgegenhaltungen:
- DE-A- 3 929 273
- DE-U- 29 605 518
- FR-A- 2 657 973
- FR-A- 2 688 679
- GB-A- 2 201 801
- GB-A- 2 276 060
- US-A- 4 805 638
- US-A- 4 922 338
- US-A- 4 991 005
- PATENT ABSTRACTS OF JAPAN vol. 096, no. 004, 30.April 1996 & JP 07 318849 A (TAIHEIYO BOEKI KK), 8.Dezember 1995,

## Beschreibung

Die Erfindung betrifft ein Video-Beratungssystem mit einer von einem Computer aus ansteuerbaren, elektronische Bilder aufnehmenden Aufnahmeeinheit, welche vom Computer räumlich getrennt ist.

Derartige Video-Beratungssysteme dienen der Kundenberatung in Fachgeschäften. Insbesondere werden derartige Geräte bei einem Augenoptiker benötigt, welcher einem Kunden eine neue Brillenfassung anpassen will. Dabei setzt der Kunde die Fassung ohne Korrektionsgläser auf und muß dann entscheiden, ob diese Fassung ihm steht. Ein Bild von sich selbst kann der Kunde in der Regel aber nur dann richtig ansehen, wenn er Korrektionsgläser vor seinen Augen hat. Damit ist das direkte Sehen aber nicht möglich, der Kunde kann nur Bilder von sich ansehen, welche der Augenoptiker zuvor aufgenommen hat.

Solche Video-Beratungssysteme sind z. B. aus der GB 2276060 A, US 4,991,005 oder der JP-A-7318849 bekannt. Weiterhin ist unter dem Handelsnamen Video Infral von der Firma Carl Zeiss ein derartiges System bekannt. Das System dient zwar primär der exakten Bestimmung der Zentrierdaten von Brillenlinsen, doch kann mit einer zusätzlichen Videokamera und Software auch eine Fassungsberatung durchgeführt werden.

Aus der GB 2 201 801 A ist eine Portraitkamera bekannt, die einen halbdurchlässigen Spiegel aufweist. Hinter dem teildurchlässigen Spiegel ist eine Kamera angeordnet, die mittels eines Auslösers aktivierbar ist. Diese Portraitkamera umfaßt ein Gehäuse, das mittels eines mit einem Gewicht versehenen Fußes, wobei das Gewicht zur Stabilisierung dient, gelagert ist.

Bei diesem System erfolgt die gleichzeitige Erfassung des Gesichtes mit angepaßter Brillenfassung von vorne und von der Seite aus mindestens 4 m Entfernung, wobei die Messung im Stehen bei der üblichen Kopf- und Körperhaltung erfolgt.

Das System besteht aus einem Computer mit hochauflösendem Monitor, welcher das Gesicht des Kunden mit angepaßter Brillenfassung detailgetreu darstellt. Die Aufnahmen werden von zwei Videokameras in einem Speziallift erstellt, welche das Gesicht gleichzeitig von vorne und von der Seite aufnehmen. Die Frontkamera ist motorisch verstellbar, um seitliche Postionsänderungen zu berücksichtigen.

Es ist die Aufgabe der Erfindung ein Video-Beratungssystem zu schaffen, welches wenig Platz benötigt und bei welchem auf eine fernsteuerbare Ausrichtung der Aufnahmeeinrichtung verzichtet werden kann.

Diese Aufgabe wird erfindungsgemäß durch den kennzeichnenden Teil des ersten Patentanspruchs gelöst.

Die erfindungsgemäße Lösung zeichnet sich dadurch aus, daß diverse Nachteile in der Handhabung und in der Kundenwirkung der sich am Markt befindlichen Aufnahmesysteme zur Video-Beratung vermieden werden.

Die exakte Bildzentrierung des Systems erfolgt nicht mehr durch den Bediener am Computer, sondern kann vom Kunden vor dem halbdurchlässigen Spiegel selber vorgenommen werden. Dies stellt eine einfache und sichere Handhabung des Systems sicher. Es ermöglicht eine leichtere Bedienbarkeit des Systems bei höherer Zufriedenheit bei der Auswahl des aufzunehmenden Bildausschnitts.

Dabei kann das System sowohl als Wand-, Boden- oder Tischmodell ausgeführt werden.

Es entfällt die subjektive Hemmschwelle des Kunden vor einer Kamera stehen zu müssen. Außerdem wird vermieden, daß der Kunde in den neben der Kamera stehenden Monitor schaut, um sich selbst zu sehen. Die erzeugten Bilder werden dabei durch den Seitenblick unvorteilhaft.

Vorteilhafterweise ist die Aufnahmeeinrichtung mit einem Autofokus ausgestattet, so daß die aufgenommenen Bilder immer scharf sind. Zusätzlich läßt sich vorteilhafterweise bei der verwendeten Kamera der ZOOM (Bildausschnitt) vom PC aus steuern. Bei den bisherigen Systemen ist die Einstellung des ZOOM nur von den Systembedienern direkt an der Aufnahmeeinheit (Kamera) möglich.

Die weiteren vorteilhaften Ausgestaltungsmöglichkeiten des Erfindungsgedankens sind in der Beschreibung erläutert.

Die Erfindung wird im folgenden anhand der ein Ausführungsbeispiel darstellenden Figuren 1-3 der beigefügten Zeichnungen erläutert, wobei weitere vorteilhafte erfinderische Merkmale beschrieben werden.

Es zeigen:
- Figur 1A: eine schematische Zeichnung einer ersten Ausführung der Erfindung;
- Figur 1B: eine schematische Zeichnung einer zweiten Ausführung der Erfindung;
- Figur 2: eine seitliche Ansicht von hinten eines erfindungsgemäßen Video-Beratungssystems; und
- Figur 3: eine seitliche Ansicht von vorne des Systems aus Figur 3.

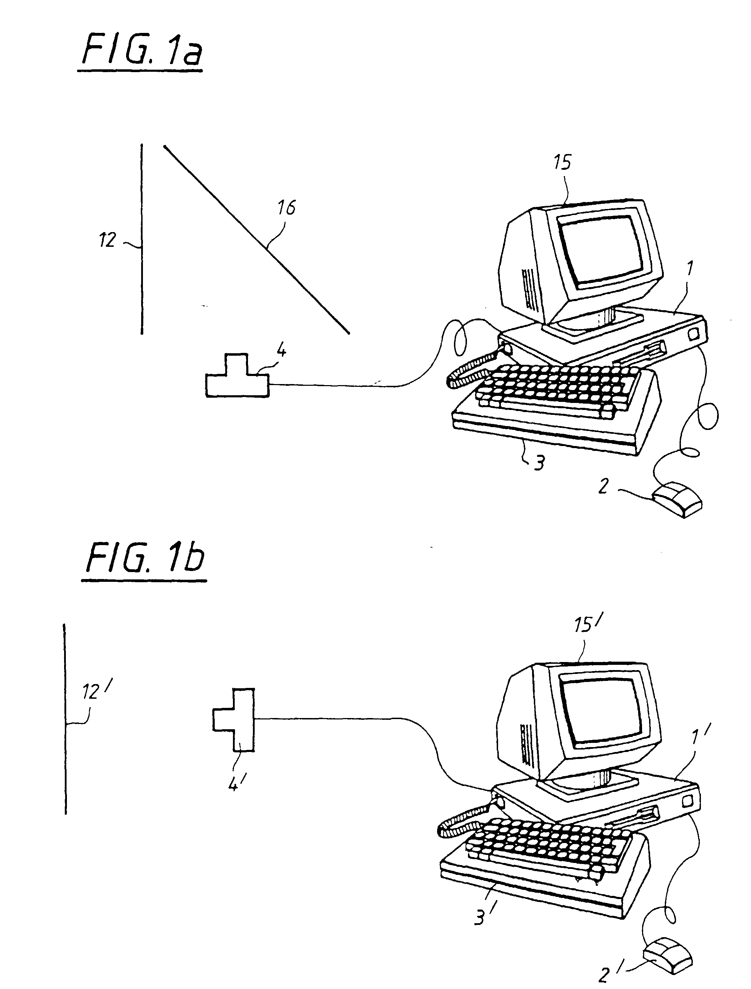

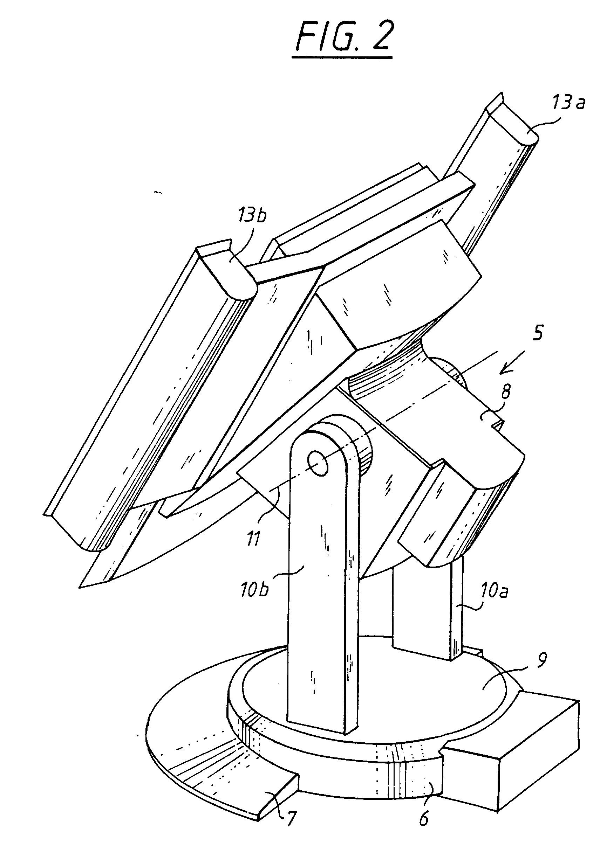

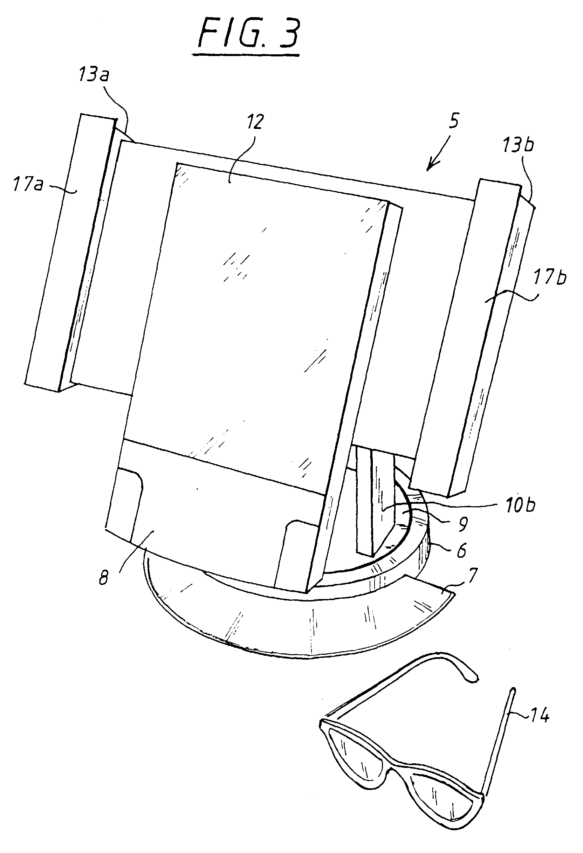

In den Figuren 1 bis 3 ist das erfindungsgemäßes Video-Beratungssystem dargestellt.

Das System besteht aus einem handelsüblichen Computer (1, 1') mit Eingabeeinrichtungen (2, 2', 3, 3') (Tastatur, Maus, usw.), an welchem eine handelsübliche Videoaufnahmeeinheit (4, 4') hinter einem teildurchlässigen Spiegel (12, 12') über eine Videokarte an den Computer (1, 1') angeschlossen ist.

Diese Videoaufnahmeeinheit (4, 4') befindet sich in einem transportierbaren Tischstativ (5). Das Tischstativ (5) (welche auch als Wandstativ ausgeführt sein kann) besteht im wesentlichen aus einem Drehfuß (6) mit verbreiterter Auflagefläche (7), auf welchem ein die Aufnahmeeinheit (4, 4') beinhaltendes Gehäuse (8) schwenkbar angebracht ist.

In dem Drehfuß (6) mit der breiteren Auflagefläche (7), welcher einen sicheren Stand des Gerätes (5) auf einem Tisch sicherstellt, ist eine runde obere Öffnung angebracht, in welchem ein runder Drehteller (9) formschlüssig drehbar eingebracht ist.

Auf dem Drehteller (9) ragen zwei Stützen (10a, 10b) senkrecht nach oben. Am oberen Ende der Stützen (10a, 10b) befindet sich jeweils eine Scharnierhälfte, welche eine Schwenkachse (11) definieren. Diese Schwenkachse (11) liegt parallel zur Drehebene des Drehtellers (9). Die korrespondierenden Scharnierhälften sind an dem Gehäuse (8) mit der Aufnahmeeinheit (4, 4') angebracht und erlauben zusammen mit den Scharnierhälften an den Stützen (10a, 10b) eine definierte Schwenkbewegung (Kippbewegung) nur um die oben genannte Schwenkachse (11) (Kipp- oder Schwenklagerung).

Das Gehäuse (8) besteht im wesentlichen aus einem teildurchlässigen Spiegel (12, 12'), welcher einen Teil der auf ihn fallenden Strahlung hindurch und auf die Aufnahmeeinrichtung (4, 4') fallen läßt.

Die Lichtdurchlässigkeit (Transmission) des teildurchlässigen Spiegels muß so gewählt werden, daß die Spiegelwirkung für den Betrachter (Kunden) ausreichend gut ist und die Kamera noch genügend Licht für ein qualitativ gutes Bild erhält. Eine Lichtdurchlässigkeit von 20 bis 30 % hat sich als bester Kompromiß erwiesen. In der Praxis bedeutet dies, daß bei der Raumausleuchtung für ein genügend helles Licht am Stellplatz des Beratungssystems zu sorgen ist.

Seitlich des Gehäuses (8) befindet sich jeweils ein Griff (13a, 13b), welcher es einem Betrachter seines Spiegelbildes ermöglicht, sich die räumliche Orientierung des Spiegels (12, 12') nach seinen Wünschen anzupassen. Dabei sind die Handgriffe (13a, 13b) möglichst weit von der Drehachse des Drehtellers (9) entfernt, um eine Dreh- und Schwenkbewegung des Gehäuses (8) unter minimalen Kraftaufwand zu ermöglichen.

In den Griffen (13a, 13b) ist eine Beleuchtung (17a, 17b) integriert, welche für homogene und schattenfreie Ausleuchtung des Kundengesichtes bei der Aufnahme durch die Kamera sorgt. Diese Beleuchtung (17a, 17b) ist so ausgewählt, daß sie für die Videoaufnahmen eine ideale Farbtemperatur besitzt. Das heißt, das Strahlungsspektrum der Beleuchtung (17a, 17b) ist auf die spektrale Empfindlichkeit der Videokamera (4, 4') abgestimmt.

Die Kabel der Aufnahmeeinrichtung (4, 4') zum Computer (1, 1') sind vollständig in dem Gehäuse (8) geführt und gelangen durch die Schwenk-Scharniere durch die Stützen (10a, 10b) in den Drehfuß (6), welchen sie entweder im hinteren Teil oder nach unten hinaus verlassen. Ist letzteres der Fall, so kann man dem Video-Beratungssystem seine Funktion als Aufnahmegerät nicht ansehen und das System erscheint als ganz normaler Tischspiegel.

Die durch den teildurchlässigen Spiegel (12, 12') dringende Raumstrahlung fällt entweder direkt oder über einen Umlenkspiegel (16) auf die Aufnahmeeinrichtung (4, 4'), welche als Videokamera (mit RS232-Schnittstelle) ausgeführt ist (im Prinzip wäre hier auch der Einsatz einer elektronischen Fotokamera denkbar).

Die Aufnahmeeinrichtung (4, 4') besitzt einen Autofokus, so daß sich auf dem Aufnahmechip immer ein scharfes Bild ergibt. Durch den Computer (1, 1') lassen sich weitere diverse Kameraeinstellungen (z.B. Farbbalance, Zoom, AGC, usw.) über die Schnittstelle einstellen.

Die prinzipielle Anordnung von teildurchlässigem Spiegel (12, 12') zur Aufnahmeeinrichtung (4, 4') ist in den Figuren 1A und 1B dargestellt.

Fällt das durch den teildurchlässigen Spiegel (12, 12') fallende Licht direkt auf die Aufnahmeeinrichtung (4, 4'), so erscheint auf dem Monitor (15, 15') des Computers (1, 1') ein seitenrichtiges Bild der sich im Spiegel (12, 12') betrachtenden Person. Das spiegelverkehrte Bild ist für den Betrachter das "gewohnte" Bild, so wie er sich im Spiegel sieht. Dieses Bild kann elektronisch (bzw. durch eine Software) spiegelverkehrt gemacht werden (Figur 1A) oder das Bild wird über einen Umlenkspiegel (16) aufgenommen, welcher das durch den teildurchlässigen Spiegel (12, 12') fallende Licht in Richtung auf die Aufnahmeeinrichtung (4, 4') reflektiert, so daß gleich das spiegelverkehrte Bild von der Aufnahmeeinrichtung (4, 4') aufgenommen wird (Figur 1B).

Im Computer (1, 1') besteht die Möglichkeit, mehrere Bilder abzuspeichern, so daß z.B. ein Augenoptiker bei einer Fassungsberatung für Brillen (14) erst diverse Aufnahmen des Kunden mit unterschiedlichen Fassungen (14) (in welchen Brillenlinsen ohne optische Wirkung eingesetzt sind) machen kann. Danach kann der Kunde mit seiner Brille (welche Korrektionslinsen nach den Bedürfnissen des Kunden enthält) sich diese Bilder ansehen und seine Entscheidung treffen. Insofern ist das Video-Beratungssystem insbesondere für Augenoptiker von Interesse, da dessen Kunden bei einer Fassungsberatung Schwierigkeiten haben ihr Ebenbild im Spiegel (12, 12') mit Brillenfassungen (14) ohne entsprechende Korrektionslinsen anzusehen.

## Patentansprüche

1. Video-Beratungssystem mit einer von einem Computer aus ansteuerbaren, elektronische Bilder aufnehmenden Aufnahmeeinheit (4, 4'), die hinter einem teildurchlässigen Spiegel (12, 12') angeordnet ist, dadurch gekennzeichnet, daß der Computer in einem separatem Gehäuse räumlich getrennt von der Aufnahmeeinheit angeordnet ist, und daß die hinter dem teildurchlässigen Spiegel angeordnete Aufnahmeeinheit in einem Gehäuse angeordnet ist, das über eine Schwenklagerung auf einem Drehfuß gelagert ist, und daß die Drehachse (11) der Schwenklagerung parallel zur Rotationsebene des Drehfußes (6) orientiert ist, und daß der Drehfuß aus einem festen and einem drehbaren Teil besteht.

2. Video-Beratungssystem nach Anspruch 1, dadurch gekennzeichnet, daß der Drehfuß (6) einen Drehteller (9) umfaßt, der den drehbaren Teil des Drehfußes bildet.

3. Video-Beratungssystem nach Anspruch 2, dadurch gekennzeichnet, daß an dem Drehfuß (6) eine vergrößerte Standfläche (7) angebracht ist.

4. Video-Beratungssystem nach Anspruch 2, dadurch gekennzeichnet, daß in einem Stativ (5) eine kardanische Aufhängung für die Aufnahmeeinheit (4, 4') angebracht ist.

5. Video-Beratungssystem nach einem der Ansprüche 1-4, dadurch gekennzeichnet, daß zwischen Spiegel (12) und Aufnahmeeinheit (4) ein Umlenkspiegel (16) angebracht ist.

6. Video-Beratungssystem nach Anspruch 1, dadurch gekennzeichnet, daß die Aufnahmeeinheit (4, 4') mit einem Autofokus ausgestattet ist.

7. Video-Beratungssystem nach Anspruch 2 oder 3, dadurch gekennzeichnet, daß seitlich des teildurchlässigen Spiegels (12, 12') Handgriffe (13a, 13b) angebracht sind.

8. Video-Beratungssystem nach einem der Ansprüche 1-7, dadurch gekennzeichnet, daß am Gehäuse (8) der Aufnahmeeinheit (4, 4') eine Beleuchtungseinrichtung (17a, 17b) angebracht ist, welche für eine homogene und schattenfreie Ausleuchtung des Kundengesichtes sorgt.

## Claims

1. Video consultation system having a recording unit (4, 4'), which can be driven from a computer, records electronic images and is arranged behind a partly transparent mirror (12, 12'), characterized in that the computer is arranged in a separate housing spatially separated from the recording unit, and in that the recording unit arranged behind the partly transparent mirror is arranged in a housing which is mounted on a rotary base by means of a pivot bearing arrangement, and in that the axis (11) of rotation of the pivot bearing arrangement is oriented parallel to the rotation plane of the rotary base (6), and in that the rotary base comprises a fixed and a rotatable part.

2. Video consultation system according to Claim 1, characterized in that the rotary base (6) comprises a turntable (9), which forms the rotatable part of the rotary base.

3. Video consultation system according to Claim 2, characterized in that an enlarged standing surface (7) is fitted to the rotary base (6).

4. Video consultation system according to Claim 2, characterized in that a cardanic suspension for the recording unit (4, 4') is fitted in a stand (5).

5. Video consultation system according to one of Claims 1-4 ,characterized in that a deflection mirror (16) is fitted between mirror (12) and recording unit (4).

6. Video consultation system according to Claim 1, characterized in that the recording unit (4, 4') is fitted with an autofocus.

7. Video consultation system according to Claim 2 or 3, characterized in that handles (13a, 13b) are fitted laterally with respect to the partly transparent mirror (12, 12').

8. Video consultation system according to one of Claims 1-7, characterized in that an illumination device (17a, 17b) is fitted to the housing (8) of the recording unit (4, 4'), which device ensures that the customer's face is illuminated fully in a homogeneous manner and without shadows.

## Revendications

1. Système de consultation vidéo avec une unité d'acquisition (4, 4') commandée par un ordinateur et enregistrant des images électroniques, qui est disposée derrière un miroir semi-argenté (12, 12'), caractérisé en ce que l'ordinateur est installé dans un boitier séparé de manière à être espacé de l'unité d'acquisition, que l'unité d'acquisition disposée derrière le miroir semi-argenté est disposée dans un boîtier qui est posé sur un pied orientable par le biais d'un palier de pivotement, que l'axe de rotation (11) du palier de pivotement est orienté parallèlement au plan de rotation du pied orientable (6) et que le pied orientable se compose d'une partie fixe et d'une partie orientable.

2. Système de consultation vidéo selon la revendication 1, caractérisé en ce que le pied orientable (6) comprend un plateau orientable (9) qui forme la partie orientable du pied orientable.

3. Système de consultation vidéo selon la revendication 2, caractérisé en ce qu'une surface d'appui agrandie (7) est montée sur le pied orientable (6).

4. Système de consultation vidéo selon la revendication 2, caractérisé en ce qu'une suspension à cardan pour l'unité d'acquisition (4, 4') est montée dans un pied (5).

5. Système de consultation vidéo selon l'une des revendications 1 à 4, caractérisé en ce qu'un miroir de déviation (16) est monté entre le miroir (12) et l'unité d'acquisition (4).

6. Système de consultation vidéo selon la revendication 1, caractérisé en ce que l'unité d'acquisition (4, 4') est équipée d'un autofocus.

7. Système de consultation vidéo selon la revendication 2 ou 3, caractérisé en ce que des poignées (13a, 13b) sont montées sur les côtés du miroir semi-argenté (12,12').

8. Système de consultation vidéo selon l'une des revendications 1 à 7, caractérisé en ce qu'un dispositif d'éclairage (17a, 17b) est monté sur le boîtier (8) de l'unité d'acquisition (4, 4'), lequel dispositif contribue à un éclairage homogène et sans ombres du visage du client.
